# EUROPEAN PATENT APPLICATION

(11) **EP 3 907 365 A1**
(43) Date of publication of application: **10.11.2021**
(21) Application number: 21170772.4
(22) Date of filing: 27.04.2021
(51) Int. Cl.: E05F 1/12, B64D 11/00

(54) **STOWAGE ASSEMBLY AND METHOD**

(30) Priority: 27.04.2020 IN 202041017946; 14.12.2020 US 202017121409
(71) Applicant: B/E Aerospace, Inc., Winston-Salem, NC 27105 (US)
(72) Inventor: RAO, Sreekanth Koti Ananda, 560061 Bangalore (IN)
(74) Representative: Dehns

(57) **Abstract**

A self-stowage device may comprise: a housing (200) comprising a slot (240), the housing having a blind hole (212) disposed in the first end extending to the second end, the housing including an outer surface (230) extending from the first end to the second end, the slot disposed through the outer surface, the slot extending axially and circumferentially about the outer surface; a spring (310) disposed in the blind hole, the spring having a first spring end (322) and a second spring end (324), the second spring end configured to compress against the second end of the housing; a shaft (320) disposed in the blind hole, the shaft disposed adjacent to the first spring end; and a pin (350) coupled to the shaft, the pin disposed in the slot, the pin and the slot configured to convert a rotary motion of the shaft into a linear motion of the shaft.

## Description

### CROSS-REFERENCE TO RELATED APPLICATIONS

This application is a non-provisional of, and claims priority to, and the benefit of India Provisional Application No., 202041017946 with DAS code 8DC9, entitled "SELF STOWAGE ASSEMBLIES, SYSTEMS, AND METHODS," filed on April 27, 2020.

### FIELD

The present disclosure relates to self-stowage assemblies, and, more specifically, to self-stowage assemblies, systems and methods for use in aircrafts.

### BACKGROUND

Typical self-stowage assemblies include fixed ends with torsion wires secured to a hinge plate. The moving ends of typical self-stowage assemblies are often secured by another hinge plate that moves with the door. Typical self-stowage assemblies may result in damage due to mechanical wear due to constant use. The wear may result in additional challenges for retrieving stowed items, such as life vests.

### SUMMARY

A self-stowage device is disclosed herein. The self-stowage device may comprise: a housing comprising a slot, the housing extending from a first end to a second end, the housing having a blind hole disposed in the first end extending to the second end, the housing including an outer surface extending from the first end to the second end, the slot disposed through the outer surface, the slot extending axially and circumferentially about the outer surface; a spring disposed in the blind hole, the spring having a first spring end and a second spring end, the second spring end configured to compress against the second end of the housing; a shaft disposed in the blind hole, the shaft disposed adjacent to the first spring end; and a pin coupled to the shaft, the pin disposed in the slot, the pin and the slot configured to convert a rotary motion of the shaft into a linear motion of the shaft.

In various embodiments, the housing is cylindrical, and wherein, the slot is a helical slot. The self-stowage device may further comprise a protrusion extending from the shaft out of the housing, the protrusion configured to transfer torque to a flange of a door. The self-stowage device may further comprise a stopper coupled to the protrusion. The slot may be configured to guide the pin in response to rotating the shaft. The spring may be configured to compress in response to the linear motion of the shaft. The self-stowage device may further comprise a spring integrated shaft including the spring and the shaft. The shaft may be configured to operably couple to a door.

A self-stowage assembly is disclosed herein. The self-stowage assembly may comprise: a door having a first flange; a housing comprising a slot disposed through the housing; a spring disposed in the housing; a shaft coupled to the first flange, the shaft disposed in the housing adjacent to the spring, the spring disposed between an end of the housing and the shaft; a pin coupled to the shaft, the pin extending into the slot, the slot configured to convert a rotary motion of the shaft into a linear motion of the shaft by guiding the pin.

In various embodiments, the self-stowage assembly may further comprise a first wall, the housing disposed in the first wall. The self-stowage assembly may further comprise a second wall, a second housing, and a second shaft, the second wall disposed opposite the first wall, the second housing disposed in the second wall, the second shaft disposed in the second housing, the second shaft coupled to a second flange of the door. The door may be configured to pivot about a centerline defined by the shaft and the second shaft. The slot may be a helical slot. The self-stowage assembly may further comprise a protrusion extending from the shaft and configured to engage the first flange, the protrusion configured to transfer torque from the shaft to the first flange. The self-stowage assembly may further comprise a stopper coupled to the protrusion, the stopper configured to limit a linear distance traveled by the shaft. The slot may be configured to guide the pin in response to rotating the shaft. The spring may be configured to compress in response to the linear motion of the shaft.

A method of using a self-stowage assembly is disclosed herein. The method may comprise: pivoting a door about a shaft; traversing the shaft linearly in a first direction in response to pivoting the door from a stowed position to an open position; and compressing a spring via the shaft in response to traversing the shaft linearly.

In various embodiments, the method may further comprise traversing the shaft linearly in a second direction in response to releasing the door. The second direction may be opposite the first direction.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates an aircraft, in accordance with various embodiments;
FIG. 2 illustrates a perspective view of a housing for a self-stowage device, in accordance with various embodiments;
FIG. 3 illustrates a perspective view of an integrated shaft spring for a self-stowage device, in accordance with various embodiments;
FIG. 4 illustrates a perspective view of a self-stowage assembly, in accordance with various embodiments;
FIG. 5 illustrates a perspective view of a portion of a self-stowage assembly, in accordance with various embodiments;
FIG. 6 illustrates a perspective view of a portion of a self-stowage assembly, in accordance with various embodiments;
FIG. 7 illustrates a cross-sectional view of a portion of a self-stowage assembly in a stowed position, in accordance with various embodiments;
FIG. 8 illustrates a cross-sectional view of a portion of a self-stowage assembly in a loaded position, in accordance with various embodiments; and
FIG. 9 illustrates a method of using a self-stowage assembly, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation.

The scope of the disclosure is defined by the appended claims and their legal equivalents rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, coupled, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

A self-stowage device is disclosed herein. The self-stowage device may comprise a housing, a shaft, a spring, a stopper, and a pin. The housing may comprise a helical slot disposed therein. The spring may be disposed in the housing. The shaft may be disposed in the housing and coupled to the spring. The spring may be between a first end of the housing the shaft. The pin may be coupled to the shaft and extend through the helical slot. A protrusion of the shaft may extend axially from a first end of the shaft, the first end being opposite a second end disposed adjacent to the spring. The stopper may be coupled to the protrusion. As the self-stowage device rotates from a neutral position to a loaded position, the rotary motion of the shaft is converted to linear motion of the shaft towards the spring by the helical slot and pin configuration. In this regard, the rotary motion of the shaft compresses the spring and thereby stores energy in the spring. Upon releasing the self-stowage device from the neutral position, the self-storage device rotates back from the loaded position to the neutral position due to the stored energy. In this regard, in accordance with various embodiments, the self-stowage device is configured to convert rotary motion to linear motion, store energy from the linear motion, and/or release the energy to rotate the self-stowage device from a loaded position to a neutral position via the stored energy.

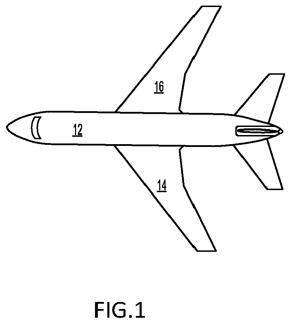

With reference to FIG. 1, an aircraft 10 in accordance with various embodiments may comprise a fuselage 12, and wings 14, 16. Wings 14, 16 may extend from fuselage 12. Disposed within fuselage 12 is a cabin. The cabin may include compartments having self-stowage assemblies. The self-stowage assemblies in the cabin may be couple to a storage compartment or the like. The storage compartment may be configured to receive life vests, life rafts, or the like. As described herein, self-stowage assemblies and devices may be utilized for any assembly that desired a component to self-rotate from a loaded state to a default (e.g., neutral) state.

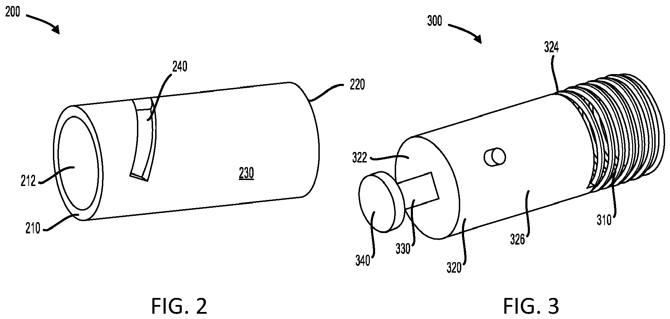

Referring now to FIG. 2, a housing 200 for a self-stowage device is illustrated, in accordance with various embodiments. The housing 200 may extend from a first end 210 to a second end 220. In various embodiments, the housing 200 may be cylindrical in shape. In various embodiments, a blind aperture 212 may be disposed at first end 210 and extend to second end 220. The blind aperture 212 may be configured to receive a spring and a shaft, as described further herein. In various embodiments, the housing 200 comprises an outer diameter surface 230. The outer diameter surface 230 may extend from first end 210 to second end 220. In various embodiments, a slot 240 is disposed in the outer diameter surface 230. In various embodiments, the slot 240 is configured to receive a pin therein.

In various embodiments, the slot 240 may be configured to guide the pin in response to rotary motion of a shaft and/or translate the shaft in response to the pin being guided by slot 240. In this regard, the slot 240 may comprise any shape configured to convert rotary motion to linear motion (e.g., a helical slot, a diagonal slot, a curvilinear slot, or the like). In various embodiments the slot 240 is a helical slot. A helical slot may provide a smooth transition from rotary motion to linear motion for a respective pin and shaft configuration disposed in the housing 200. In various embodiments, the slot 240 may comprise an arc angle approximately equal to a maximum arc angle for a respective door in a self-stowage assembly. For example, when a door is configured to rotate a maximum of 90 degrees, the arc angle of the slot 240 may be approximately 90 degrees measured relatively from an axial plane.

Referring now to FIG. 3, an integrated spring shaft 300, in accordance with various embodiments, is illustrated. The integrated spring shaft 300 comprises a spring 310, a shaft 320, a protrusion 330, and a stopper 340. Although the integrated spring shaft 300 is illustrated as having an integral spring 310 and shaft 320, a discrete spring and a discrete shaft is within the scope of this disclosure. In various embodiments, an integrated spring shaft 300 may allow for fewer components of an assembly. In various embodiments, an integrated spring shaft 300 may be easier to assemble.

In various embodiments, the shaft 320 extends from a first end 322 to a second end 324 disposed opposite the first end 322. The spring 310 may be coupled to, or integral with, the second end 324 of the shaft 320. The shaft 320 may be cylindrical in shape. With brief reference to FIG. 2, the blind aperture 212 may be configured to receive the shaft 320 and spring 310 of the integrated spring shaft 300. In various embodiments, shaft 320 comprises an outer diameter surface 326.

In various embodiments, the protrusion 330 extends from first end 322 away from second end 324 towards the stopper 340. In various embodiments, the protrusion 330 is configured to transfer torque to a door, or the like. For example, the protrusion 330 may include a square cross section, a triangular cross section, a pentagonal cross section, a hexagonal cross section, or the like. In this regard, sides of the protrusion 330 may interface a complimentary aperture to rotate the respective door in response to shaft 320 rotating.

In various embodiments, the stopper 340 is coupled to the protrusion 330 opposite first end 322 of the shaft 320. The stopper 340 is configured to axially limit linear movement of the integrated spring shaft 300. For example, in response to traversing axially and compressing spring 310 stopper 340 may abut a surface of a respective door and limit any additional axial movement of the integrated spring shaft 300. Stopper 340 may thus stop the axial movement of integrated spring shaft 300 in response to abutting the respective door.

In various embodiments, the integrated shaft spring further comprises a pin 350. The pin 350 may be coupled to the outer diameter surface 326 of the shaft 320. With brief reference to FIG. 2, the pin 350 may be configured to protrude through slot 240 of housing 200. In this regard, pin 350 may be guided by slot 240 during operation of a respective self-stowage device.

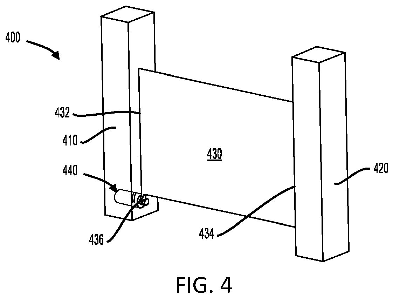

Referring now to FIG. 4, a perspective view of a self-stowage assembly 400 is illustrated, in accordance with various embodiments. The self-stowage assembly 400 may comprise a first wall 410, a second wall 420, a door 430, and a self-stowage device 440. Self-stowage device 440 may comprise housing 200 from FIG. 2 and integrated shaft spring 300 from FIG. 3. The first wall 410 may be disposed at a first end 432 of the door 430. The second wall 420 may be disposed at a second end 434 of the door 430. The first end 432 may be opposite to the second end 434.

In various embodiments, the door 430 comprises a first flange 436 pivotably coupled to the protrusion 330 of the integrated spring shaft 300 of the self-stowage device 440. For example, the first flange 436 may comprise an aperture complimentary in cross-sectional shape to the protrusion 330 from FIG. 3. In this regard, protrusion 330 from FIG. 3 may be configured to transfer torque from the integrated spring shaft 300 of the self-stowage device 440 into the first flange 436 of the door 430 causing the door 430 to rotate about a centerline defined by the shaft 320 of integrated spring shaft 300 of the self-stowage device 440.

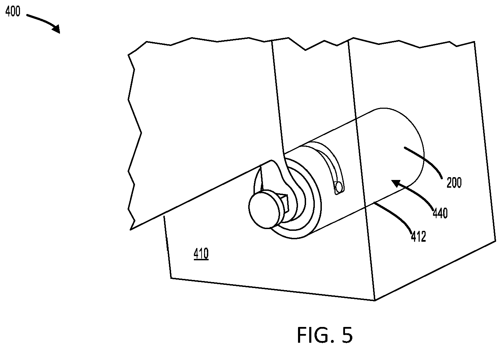

Referring now to FIG. 5, a perspective view of a portion of the self-stowage assembly 400 is illustrated, in accordance with various embodiments. In various embodiments, housing 200 of the self-stowage device 440 may be coupled to the first wall 410. For example, first wall 410 may comprise a blind hole 412 configured to receive the housing 200. The blind hole 412 may comprise an insert or the like. The housing 200 may be threadingly coupled to the blind hole 412, press fit into the blind hole 412, or the like.

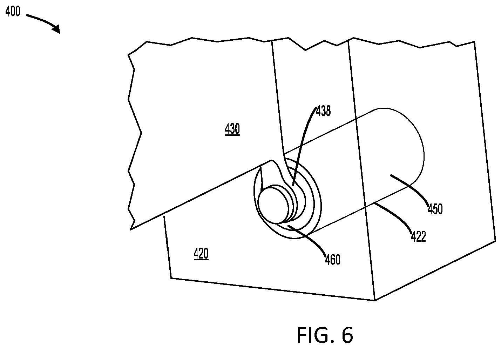

Referring now to FIG. 6, a perspective view of a portion of the self-stowage assembly 400 is illustrated, in accordance with various embodiments. In various embodiments, second wall 420 may comprise a blind hole 422 configured to receive a second housing 450. The second housing 450 may be configured to receive a second shaft 460. The second shaft 460 may be pivotably coupled to a second flange 438 of the door 430 in a manner similar to first flange 436 and protrusion 330 of the self-stowage device 440. In this regard, door 430 may be configured to pivot about a centerline defined by the second shaft 460. In various embodiments, the second shaft 460 and the second housing 450 may be in accordance with the self-stowage device 440 from FIG. 4. In various embodiments, the second shaft 460 and the second housing 450 may be a simple shaft and housing configuration not in accordance with self-stowage device 440. In this regard, a single self-stowage device 440 and two self-stowage devices 440 utilized in a self-stowage assembly 400 are both within the scope of this disclosure.

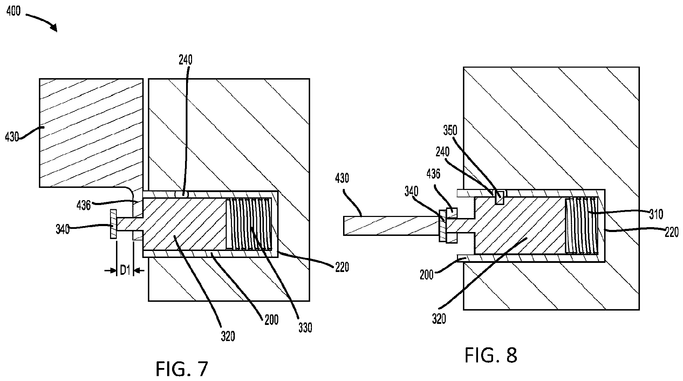

Referring now to FIG. 7 and FIG. 8, a cross-sectional view of a portion of a self-stowage assembly 400 in a stowed position (FIG. 7) and an open position (FIG. 8) are illustrated, in accordance with various embodiments. In a stowed position, the stopper 340 is separated from the first flange 436 of the door 430 by a distance D1. In response to opening the door 430, the pin 350 is guided by the slot 240 in housing 200 causing the shaft 320 to travel linearly within the housing 200 and compress the spring 310. The shaft 320 may travel the linear distance D1 until the stopper 340 abuts the first flange 436 resulting in an open door configuration. By compressing the spring 310 against the second end 220 of the housing 200, the spring 310 stores energy. In this regard, when the door 430 is released, the spring may return the shaft 320 to a neutral position (e.g., a stowed position), as shown in FIG. 7.

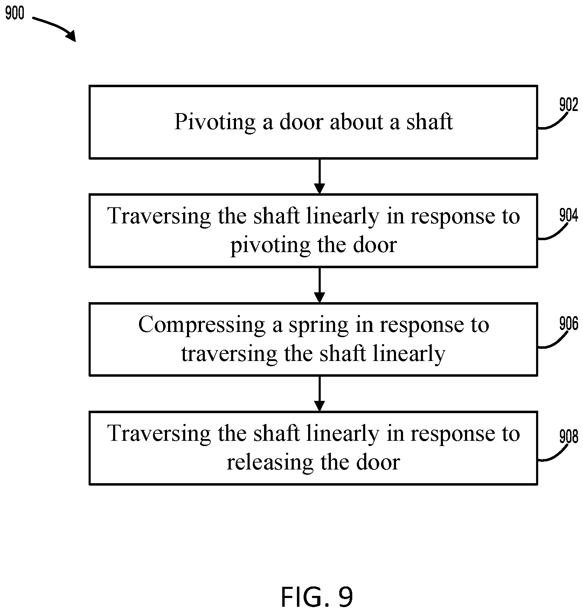

Referring now to FIG. 9, a method of using a stowage assembly, such as self-stowage assembly 400 from FIG. 4, is illustrated, in accordance with various embodiments. The method 900 comprises pivoting a door about a shaft (step 902). In various embodiments, the door may transfer torque into the shaft via a protrusion and aperture interface as described herein. In various embodiments, the shaft may rotate in response to pivoting the door.

In various embodiments, the method 900 further comprises traversing the shaft linearly in a first direction in response to pivoting the door (step 904). The shaft may traverse linearly via a pin and slot disposed in a housing as described herein. The slot may extend at least partially axially. As such, the slot may guide the pin and cause the shaft to traverse axially within the housing. The shaft may be coupled to a spring within the housing.

In various embodiments, the method 900 further comprises compressing the spring in response to traversing the shaft linearly (step 906). In this regard, the shaft may compress the spring within the housing and store energy from the rotary motion of the door. In this regard, the spring may be loaded when the door is in an open position.

In various embodiments, the method 900 further comprises traversing the shaft linearly in a second direction in response to releasing the door (step 908). In various embodiments, the second direction may be opposite to the first direction. In various embodiments, traversing the shaft linearly in the second direction may result in returning the door to a closed, or stowed position.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A self-stowage device, comprising:
a housing (200) comprising a slot (240), the housing extending from a first end (210) to a second end (220), the housing having a blind hole (212) disposed in the first end extending to the second end, the housing including an outer surface (230) extending from the first end to the second end, the slot disposed through the outer surface, the slot extending axially and circumferentially about the outer surface;
a spring (310) disposed in the blind hole, the spring having a first spring end (322) and a second spring end (324), the second spring end configured to compress against the second end of the housing;
a shaft (320) disposed in the blind hole, the shaft disposed adjacent to the first spring end; and
a pin (350) coupled to the shaft, the pin disposed in the slot, the pin and the slot configured to convert a rotary motion of the shaft into a linear motion of the shaft.

2. The self-stowage device of claim 1, wherein the housing (200) is cylindrical, and wherein, the slot (240) is a helical slot.

3. The self-stowage device of claim 1 or 2, further comprising a protrusion (330) extending from the shaft out of the housing, the protrusion configured to transfer torque to a flange of a door, and optionally further comprising a stopper (340) coupled to the protrusion.

4. The self-stowage device of any preceding claim, wherein the slot (240) is configured to guide the pin in response to rotating the shaft.

5. The self-stowage device of any preceding claim, wherein the spring (310) is configured to compress in response to the linear motion of the shaft.

6. The self-stowage device of any preceding claim, further comprising a spring integrated shaft (300) including the spring and the shaft.

7. The self-stowage device of any preceding claim, wherein the shaft is configured to operably couple to a door.

8. A self-stowage assembly, the self-stowage assembly comprising:
a door (430) having a first flange (436);
a housing (200) comprising a slot (240) disposed through the housing;
a spring (310) disposed in the housing;
a shaft (320) coupled to the first flange, the shaft disposed in the housing adjacent to the spring, the spring disposed between an end of the housing and the shaft;
a pin (350) coupled to the shaft, the pin extending into the slot, the slot configured to convert a rotary motion of the shaft into a linear motion of the shaft by guiding the pin.

9. The self-stowage assembly of claim 8, further comprising a first wall (410), the housing disposed in the first wall.

10. The self-stowage assembly of claim 9, further comprising a second wall (420), a second housing, and a second shaft, the second wall disposed opposite the first wall, the second housing disposed in the second wall, the second shaft disposed in the second housing, the second shaft coupled to a second flange of the door, and optionally wherein the door is configured to pivot about a centerline defined by the shaft and the second shaft.

11. The self-stowage assembly of claim 8, 9 or 10, wherein the slot (240) is a helical slot.

12. The self-stowage assembly of claim 8, 9, 10 or 11, further comprising a protrusion (330) extending from the shaft and configured to engage the first flange, the protrusion configured to transfer torque from the shaft to the first flange, and optionally further comprising a stopper (340) coupled to the protrusion, the stopper configured to limit a linear distance traveled by the shaft.

13. The self-stowage assembly of any of claims 8 to 12, wherein the slot is configured to guide the pin in response to rotating the shaft, and/or wherein the spring is configured to compress in response to the linear motion of the shaft.

14. A method of using a self-stowage assembly, the method comprising:
pivoting a door about a shaft;
traversing the shaft linearly in a first direction in response to pivoting the door from a stowed position to an open position; and
compressing a spring via the shaft in response to traversing the shaft linearly.

15. The method of claim 14, further comprising traversing the shaft linearly in a second direction in response to releasing the door, and optionally wherein the second direction is opposite to the first direction.
